# EUROPÄISCHE PATENTANMELDUNG

(11) **EP 0 773 355 A1**
(43) Veröffentlichungstag der Anmeldung: **14.05.1997**
(21) Anmeldenummer: 96116234.4
(22) Anmeldetag: 10.10.1996
(51) Int. Cl.: F01N 7/00, F01N 3/20, F02D 41/14

(54) **Überwachungssystem für die Abgasreinigung einer Brennkraftmaschine**

(30) Priorität: 10.11.1995 DE 19541903
(71) Anmelder: Bayerische Motoren Werke Aktiengesellschaft, 80788 München (DE)
(72) Erfinder: Zimmer, Rainer, Dr., 82061 Neuried (DE); Hundertmark, Dietmar, 81375 München (DE)

(57) **Zusammenfassung**

Vorgesehen sind zwei Lambda-Sonden, von denen eine stromauf (LS1) und die andere beheizbare stromab (LS2) des Katalysators (16) vorgesehen ist. Ausgehend von einem Kaltstart der Brennkraftmaschine (10) wird im wesentlichen bis zum Erreichen der Katalysator-Anspringtemperatur die stromabwärtige Sonde (LS2) nicht beheizt, sondern zur Ermittlung der Abgastemperatur verwendet, wobei das Erreichen einer Mindesttemperatur binnen einer gewissen Zeitspanne überprüft wird.

## Beschreibung

Die Erfindung betrifft ein Überwachungssystem für die Abgasreinigung einer Brennkraftmaschine, mit zumindest zwei Lambda-Sonden, von denen eine stromauf und die andere, beheizbare, stromab eines Abgaskatalysators vorgesehen ist. Ein derartiges Überwachungssystem ist bei heutigen Kraftfahrzeugen, insbesondere solchen, die mit der sog. Onboard-Diagnose ausgerüstet sind, allgemeiner Stand der Technik, beispielshalber wird hierzu ferner auf die DE 40 09 901 verwiesen. Dabei dient die dem Katalysator vorgeschaltete Lambda-Sonde als sog. Regel-Sonde, die die aktuelle Abgaszusammensetzung erfaßt und eine Gemischaufbereitungsanlage für die Brennkraftmaschine im Hinblick auf eine gewünschte Gemisch- bzw. Abgaszusammensetzung hin ansteuert, während die zweite, dem Abgaskatalysator nachgeschaltete Lambda-Sonde als Monitor-Sonde bezeichnet wird. Letztere dient zur Überprüfung bzw. Überwachung des Abgasreinigungssystemes. Da die Abgastemperatur im Bereich der dem Katalysator nachgeschalteten Lambda-Sonde üblicherweise bereits so niedrig ist, daß eine sichere Funktion dieser Sonde nicht mehr unter allen Umständen gewährleistet ist, ist zumindest diese nachgeschaltete Monitor-Sonde üblicherweise beheizbar ausgebildet.

Im Rahmen der sog. Onboard-Diagnose ist eine effiziente Überprüfung der einzelnen Komponenten des Abgasreinigungssystemes der Fahrzeug-Brennkraftmaschine immer dann möglich, wenn der Abgaskatalysator seine Anspringtemperatur, oberhalb derer er in der Lage ist, erfolgreich die Schadstoffkonvertierung durchzuführen, erreicht hat. Solange ausgehend von einem Kaltstart der Brennkraftmaschine und somit einem ebenso kalten Abgasreinigungssystem diese Anspringtemperatur jedoch noch nicht erreicht wurde, ist keine wirkungsvolle Überprüfung möglich.

Aufgabe der Erfindung ist es daher, ein demgegenüber verbessertes Überwachungssystem für die Abgasreinigung einer Brennkraftmaschine aufzuzeigen.
Zur Lösung dieser Aufgabe ist vorgesehen, daß ausgehend von einem Kaltstart der Brennkraftmaschine im wesentlichen bis zum Erreichen der Katalysator-Anspringtemperatur die stromabwärtige Lambda-Sonde nicht beheizt, sondern zur Ermittlung der Abgastemperatur verwendet wird, wobei das Erreichen einer Mindesttemperatur binnen einer gewissen Zeitspanne überprüft wird. Die Höhe dieser Temperatur hängt von der zu diagnostizierenden Umsatzrate des Abgaskatalysators im Anspringvorgang ab. Dabei kann der Mindesttemperaturwert fest vorgegeben sein, aber auch Ergebnis einer Berechnung anhand eines Temperaturmodells sein.

Dabei ist es grundsätzlich bekannt, daß mit einer Lambda-Sonde auch eine Temperaturmessung durchgeführt werden kann. Hierzu wird beispielshalber auf die DE 38 35 852 A1 verwiesen. Ferner ist eine weitere beheizbare Lambda-Sonde der Fa. Roth Abgastechnik, die sog. kleine Planar-Sonde mit direktem Gaszugang, bekannt, die bei Nichtbeheizung unter Zuhilfenahme des Innenwiderstandes des Heizelementes als ausreichend exakt arbeitende Temperaturmeßsonde verwendet werden kann.

Zur näheren Erläuterung der Erfindung wird auf die beigefügte Prinzipskizze verwiesen, dabei ist mit der Bezugsziffer 10 eine Brennkraftmaschine, mit der Bezugsziffer 12 ein Abgasrohr derselben und mit der Bezugsziffer 16 ein sich an das Abgasrohr 12 anschließender Abgaskatalysator bezeichnet. Stromauf dieses Abgaskatalysators 16 ist im Abgasrohr 12 eine erste Lambda-Sonde LS1 vorgesehen. In gleicher Weise befindet sich eine zweite Lambda-Sonde LS2 stromab des Abgaskatalysators 16. Zumindest die letztgenannte Lambda-Sonde LS2 ist elektrisch beheizbar.

Wenn der Abgaskatalysator 16 seine Betriebstemperatur erreicht bzw. seine Anspringtemperatur überschritten hat, so ist er in der Lage, erfolgreich Abgasschadstoffe zu konvertieren. Wie bekannt sollte dabei insbesondere im Falle eines sog. Dreiwege-Katalysators Abgas vorliegen, das aus der Verbrennung eines stöchiometrischen Gemisches entstand. Wie bekannt wird die entsprechende Abgaszusammensetzung von der ersten, sog. Regel-Lambda-Sonde LS1 erkannt und ausgehend von deren Signalen eine nicht gezeigte Gemischaufbereitungsanlage der Brennkraftmaschine 10 derart angesteuert, daß stöchiometrisches Gemisch verbrannt wird. Die zweite sog. Monitor-Lambda-Sonde LS2 dient zur Kontrolle der erfolgreichen Konvertierung der Abgasschadstoffe im Abgaskatalysator 16, wobei die Ausgangssignale dieser Monitor-Lambda-Sonde LS2 ebenfalls in einer nicht gezeigten elektronischen Steuereinheit verarbeitet werden. Diese eben geschilderte Überwachung des Abgasreinigungssystemes funktioniert jedoch nur dann, wenn der Abgaskatalysator 16 bereits seine Betriebstemperatur erreicht hat.

Erfindungsgemäß ist eine zusätzliche Überwachung im sich direkt an einen Kaltstart der Brennkraftmaschine anschließenden Zeitraum möglich, d. h. eine zusätzliche Überwachung kann stattfinden, bevor der Abgaskatalysator 16 seine Anspringtemperatur erreicht hat.

Wie bereits erläutert, ist die Monitor-Lambda-Sonde LS2 elektrisch beheizbar, da die übliche Abgastemperatur im Bereich dieser Lambda-Sonde LS2 bereits so niedrig ist, daß eine sichere Erkennung der Abgaszusammensetzung nicht möglich ist. Übliche Lambda-Sonden müssen nämlich zur zuverlässigen Funktion ebenfalls eine gewisse Mindesttemperatur besitzen.

Wird nun ausgehend von einem Kaltstart der Brennkraftmaschine 10 die zweite, sog. Monitor-Lambda-Sonde LS2 zunächst nicht beheizt, so kann mit Hilfe dieser Lambda-Sonde LS2 die Temperatur des Abgasstromes im Bereich dieser Lambda-Sonde LS2 ermittelt werden. Zumindest bei Abspulen eines vorgeschriebenen Abgastest-Zyklusses, aber auch unter alltäglichen Einsatzbedingungen einer derartigen Brennkraftmaschine 10 in einem Kraftfahrzeug hat nun üblicherweise ausgehend von einem Kaltstart binnen einer gewissen Zeitspanne die Abgastemperatur im Bereich dieser Lambda-Sonde LS2 einen Mindesttemperaturwert erreicht. Eben das Erreichen dieses Mindesttemperaturwertes kann nun durch eine Temperaturmessung mit Hilfe der Lambda-Sonde LS2 überprüft werden. Sollte ausgehend von einem Kaltstart der Brennkraftmaschine binnen einer gewissen Zeitspanne dieser Mindesttemperaturwert nicht erreicht worden sein, so ist dies ein Hinweis auf einen möglichen Fehler im Abgasreinigungssystem oder Gemischaufbereitungssystem der Brennkraftmaschine 10. Bei Nichterreichen der Mindesttemperatur innerhalb der gewissen Zeitspanne kann somit ein entsprechendes Signal an die sog. Onboard-Diagnose ausgegeben werden.

Wurde hingegen von der Monitor-Lambda-Sonde LS2 binnen der vorgegebenen Zeitspanne das Erreichen der Mindesttemperatur angezeigt, so kann anschließend daran die Temperaturmessung beendet werden und die elektrische Beheizung der Lambda-Sonde LS2 eingeschaltet werden, wonach wie üblich die Überwachung im Hinblick auf den dann aktiven, da seine Betriebstemperatur aufweisenden Abgaskatalysator 16 durchgeführt werden kann. Mit dem erfindungsgemäßen Überwachungssystem liegt somit eine zusätzliche Kontrollmöglichkeit vor, insbesondere in demjenigen Zeitraum, in dem der Abgaskatalysator 16 seine Anspring- oder Betriebstemperatur noch nicht erreicht hat. Besonders vorteilhaft beim erfindungsgemäßen Überwachungssystem ist ferner die Tatsache, daß kein zusätzlicher Temperaturfühler benötigt wird, sondern daß die Temperaturmessung mit bereits vorhandenen Bauteilen, nämlich der beheizbaren Lambda-Sonde LS2 durchgeführt werden kann.

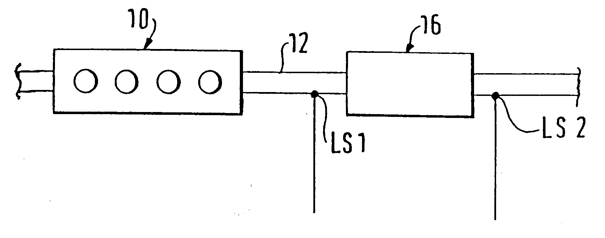

## Patentansprüche

1. Überwachungssystem für die Abgasreinigung einer Brennkraftmaschine (10), mit zumindest zwei Lambda-Sonden (LS1, LS2), von denen eine (LS1) stromauf und die andere (LS2), beheizbare, stromab eines Abgaskatalysators (16) vorgesehen ist,
dadurch gekennzeichnet, daß ausgehend von einem Kaltstart der Brennkraftmaschine (10) im wesentlichen bis zum Erreichen der Katalysator-Anspringtemperatur die stromabwärtige Lambda-Sonde (LS2) nicht beheizt, sondern zur Ermittlung der Abgastemperatur verwendet wird, wobei das Erreichen einer Mindesttemperatur binnen einer gewissen Zeitspanne überprüft wird.
